# EUROPEAN PATENT SPECIFICATION

(11) **EP 4 220 035 B1**
(45) Date of publication and mention of the grant of the patent: **07.05.2025**
(21) Application number: 22154087.5
(22) Date of filing: 28.01.2022
(51) Int. Cl.: F25B 6/02, F25B 31/00, F25B 39/04, F28F 1/00

(54) **A CHILLER SYSTEM**
KÜHLERSYSTEM
SYSTÈME DE REFROIDISSEUR

(43) Date of publication of application: 02.08.2023
(73) Proprietor: Trane International Inc., Davidson, NC 28036 (US)
(72) Inventor: GERSON, Thibaut, 88130 Charmes (FR)
(74) Representative: Haseltine Lake Kempner LLP

(56) References cited:
- WO-A1-2018/042614
- US-A1- 2008 148 746
- US-A1- 2022 011 028
- US-B2- 8 387 410

## Description

### Field of Invention

The present invention relates to a chiller system, in particular to the arrangement of condensers within said chiller systems.

### Background

A chiller system is used to chill a process fluid, such as water, which can be used to provide cooling and air conditioning in buildings. A chiller system typically includes a compressor, heat exchangers such as a condenser and an evaporator, and an expansion device forming a refrigeration circuit. Refrigerant vapour is compressed by the compressor and condensed into liquid refrigerant in the condenser. The expansion valve expands the liquid refrigerant to increase its volume and reduce its pressure and become a two-phase refrigerant. The two-phase refrigerant is directed to the evaporator, where heat is transferred from the process fluid to the refrigerant, chilling the process fluid and vaporising the two-phase refrigerant. The refrigerant vapour then returns to the compressor.

The compressor in a chiller system typically has an electric motor to provide the driving force to compress the refrigerant and drive it through the refrigeration circuit. The motor can generate heat during use, and as such, it may be desirable to provide cooling to the compressor and its associated components. The liquid refrigerant at the outlet of the condenser is subcooled prior to passing through the expansion valve to reduce its temperature. It is known to direct a portion of this subcooled refrigerant flow along a cooling line to the compressor to provide cooling to the compressor or other components to be cooled. The refrigerant in this cooling line re-joins the refrigerant circuit at or just upstream of the compressor. This refrigerant is then compressed by the compressor in the refrigeration circuit as described above.

However, the pressure of the subcooled refrigerant can be low compared to the suction pressure of the refrigerant entering the compressor, due to the pressure drop experienced by the refrigerant as it passes through the condenser and losses along the pipeline of the refrigeration circuit. This results in a low pressure differential between the refrigerant pressure in the cooling line and the suction pressure, which means that there is insufficient flow force and speed for the refrigerant in the cooling line and cooling efficiency is reduced. This weak flow can be mitigated by providing an additional pump for refrigerant in the cooling line to increase the pumping head. However, providing an additional pump is expensive and also reduces the energy efficiency of the chiller system.

There is therefore a need to provide an improved chiller system to overcome at least the aforementioned problems.

WO2018/042614 describes an air conditioning device having a refrigerant circuit, a power conversion device including a power module, and a control device that controls the refrigerant circuit and the power conversion device. US8387410 describes an air-cooling type chiller including a plurality of fans and an intermediate device provided between adjacent fans of the plurality of fans. US2022011028A1 describes a refrigerant circuit including a compressor, a heat-source-side heat exchanger, a first expansion device, and a load-side heat exchanger; a plurality of controllers configured to control the refrigerant circuit; a bypass pipe; a second expansion device provided to the bypass pipe, and configured to adjust a flow rate of the refrigerant flowing through the bypass pipe; and a plurality of refrigerant coolers provided to the bypass pipe, and configured to cool the controllers by using the refrigerant the flow rate of which is adjusted by the second expansion device, each of the plurality of refrigerant coolers including a refrigerant cooling pipe and a plate, the refrigerant cooling pipe forming the bypass pipe, the plate being joined between the refrigerant cooling pipe and one of the controllers.

### Summary

According to a first aspect according to the present invention, there is provided a chiller system comprising: a refrigeration circuit comprising, in flow order, a compressor, a main condenser, an expansion valve and an evaporator; an auxiliary cooling branch configured to receive an auxiliary refrigerant flow from the refrigerant circuit downstream of the compressor, the auxiliary cooling branch bypassing the main condenser, expansion valve and evaporator, the auxiliary branch comprising an auxiliary condenser configured to discharge refrigerant to a cooling line for cooling one or more components of the chiller system; wherein the cooling line is configured to return the portion of refrigerant flow to the refrigeration circuit at or upstream of the compressor; wherein the main condenser and auxiliary condenser are co-located for heat exchange with a common flow of an external heat exchange medium. The auxiliary condenser is located within an installation volume circumscribed by the main condenser. The main condenser comprises a plurality of main heat exchangers spaced apart from one another. The auxiliary condenser is located within the installation volume defined between the main heat exchangers. The main heat exchangers are arranged so that the installation volume extends along a longitudinal axis of the main heat exchangers and has an open axial end which is at least partly closed by the auxiliary condenser.

Each of two adjacent main heat exchangers of the main condenser may be substantially planar and defines a respective plane. The respective planes may be angled relative to each other so that the installation volume has a triangular cross-section.

The auxiliary condenser may have a peripheral profile corresponding to a cross-section of a void of the installation volume defined by the main condenser or corresponding to a shape of an end of the installation volume.

The auxiliary condenser may have a triangular peripheral profile corresponding to the triangular cross-section of the installation volume.

The auxiliary condenser may comprise one of a microchannel heat exchanger (MCHE) and a round-tube plate-fin (RTPF) heat exchanger.

The main condenser may be an air-cooled condenser. The chiller system may comprise a main condenser fan configured to provide an airflow as the common flow through both the main condenser and the auxiliary condenser.

The cooling line may be configured to cool at least one of a motor of the compressor, electronic componentry of the compressor, and a pump. The motor may be internal or external to the compressor.

A controller may be configured to control refrigerant flow around the refrigerant circuit by actuation of a control device such as the expansion valve. The cooling line may bypass the portion of the refrigerant circuit comprising the control device.

The chiller system may be configured so that the refrigerant flow and the auxiliary refrigerant flow are received at the main condenser and the auxiliary condenser, respectively, at the same condenser inlet temperature. The controller may define an operating map of operating conditions for operation of the chiller system. The main condenser and the auxiliary condenser may be configured so that throughout the operating map, a first rate of heat transfer from the refrigerant flow at the main condenser is greater than a second rate of heat transfer from the auxiliary refrigerant flow at the auxiliary condenser.

The controller may be configured to control the discharge of refrigerant to the cooling line by actuation of a solenoid valve.

The chiller system may comprise a calibrated orifice configured to control the discharge of refrigerant to the cooling line.

Except where mutually exclusive, any feature described herein may be applied to any aspect and/or combined with any other features described herein.

### Brief Description of the Drawings

Exemplary embodiments will now be described, by way of example only, with reference to the following drawings, in which:
Figure 1 is a schematic of an example chiller system according to the present invention;
Figure 2a is a schematic side view of a first example condenser unit according to the present invention;
Figure 2b is an isometric view of the condenser unit of Figure 2a;
Figure 3 is a schematic side view of a second example condenser unit according to the present invention.

### Detailed Description of the Invention

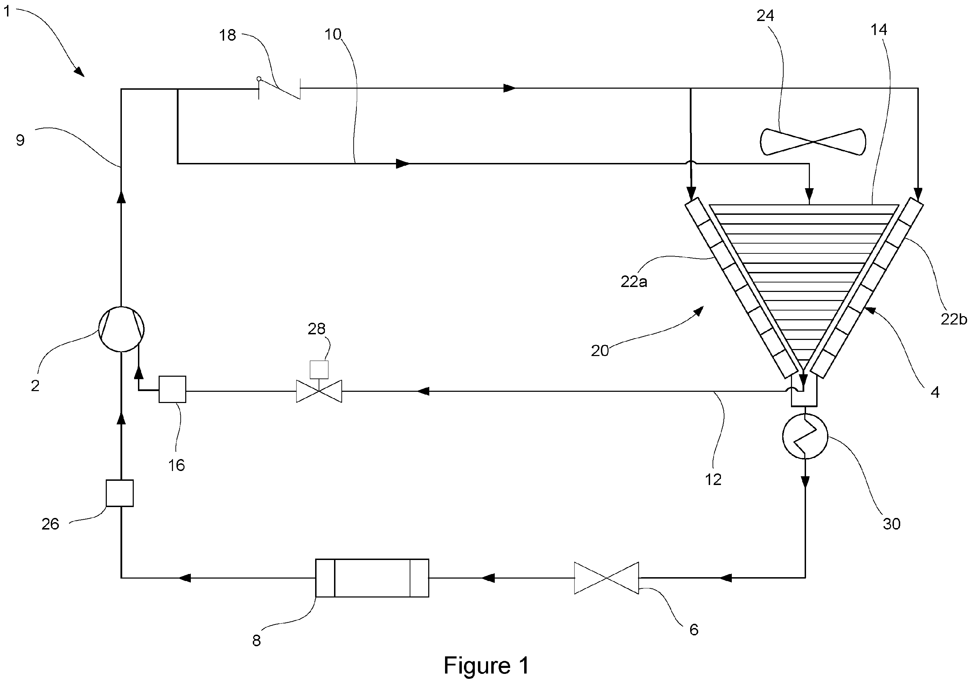

Figure 1 shows an example chiller system 1 according to the present invention. The chiller system 1 comprises, in flow order, a compressor 2, a main condenser 4, an expansion valve 6, and an evaporator 8, which are connected by refrigerant lines to form a refrigeration circuit. The compressor 2 may be any suitable compressor type, such as a centrifugal compressor, a screw-type compressor, a reciprocating-type compressor, or a scroll-type compressor. The chiller system 1 also comprises a non-return valve 18 (such as a check valve) downstream of the compressor 2 to prevent backflow in the refrigeration circuit.

The chiller system 1 comprises a condenser unit 20, including the main condenser 4, an auxiliary condenser 14, and one or more fans 24. In the example of Figure 1 (which is in accordance with the present invention), the main condenser 4 comprises a plurality of main heat exchangers 22a, 22b. An inlet of each of the plurality of main heat exchangers 22a, 22b is in fluid communication with the outlet of the compressor 2 via a discharge line 9 of the refrigeration circuit. The main heat exchangers 22a, 22b may have any suitable type of heat exchanger construction, such as microchannel heat exchangers (MCHEs), or round-tube plate-fin (RTPF) heat exchangers. A MCHE typically includes an inlet header, an outlet header and a plurality of flat tubes connecting to and communicating with the headers. Each of the flat tubes has microchannels or small pathways for the refrigerant to pass through, forming microchannel tubes. In a MCHE, refrigerant enters the inlet header and then enters the microchannel tubes. The heat exchangers are configured to conduct heat exchange between refrigerant in the tubes and an external heat exchange medium to provide cooling to the refrigerant within the microchannel tubes. In examples, the microchannel tubes may have thermally conductive fins disposed between the tubes to promote heat transfer between the refrigerant flowing through the tubes and the external heat exchange medium.

The auxiliary condenser 14 is formed as a separate heat exchanger to the main condenser 4. The auxiliary condenser 14 have any suitable type of heat exchanger construction, and for example may be a round-tube plate-fin (RTPF) heat exchanger or a MCHE. An inlet of the auxiliary condenser 14 is also in fluid communication with the outlet of the compressor 2. The auxiliary condenser 14 is fluidly coupled to the outlet of the compressor 2 via an auxiliary cooling branch 10, which diverts a portion of the refrigerant flow from the discharge line 9 to provide an auxiliary refrigerant flow to the auxiliary condenser 14. According to the invention, the auxiliary cooling branch 10 connects the auxiliary condenser 14 to a point on the discharge line 9 downstream of the compressor 2 and upstream of the non-return valve 18. However, in other examples, the auxiliary cooling branch 10 may connect the auxiliary condenser 14 to a point on the discharge line 9 which is downstream of the check valve 18. The auxiliary condenser 14 is therefore connected in parallel to the main condenser 4 in the refrigeration circuit.

The main condenser 4 and the auxiliary condenser 4 are arranged for heat transfer with an external heat exchange medium to condense the refrigerant flowing through each condenser 4, 14. In this example both the main condenser 4 and the auxiliary condenser 14 are air-cooled condensers, such that the refrigerant flowing through the main heat exchangers 22a, 22b and the auxiliary condenser 1 are arranged for heat transfer with air as the external heat exchange medium. The main condenser 4 and the auxiliary condenser 14 are co-located within the condenser unit 20, such that a common flow of air provides the external heat exchange medium for both the main condenser 4 and the auxiliary condenser 14. The one or more fans 24 are configured to provide a flow of air across both the main condenser 4 and the auxiliary condenser 14 to enable the refrigerant within the condensers to reject heat to the air. Only a single set of one or more fans 24 may be required to provide sufficient airflow for heat transfer over both the main condenser 4 and the auxiliary condenser 14. Therefore, the inclusion of an auxiliary condenser 14 in addition to a main condenser does not necessitate an additional dedicated fan to be provided and thus avoids the additional power consumption and noise that would be generated as a result of having such an additional fan.

In this example, the chiller system 1 also comprises a subcooler 30 disposed downstream of the main condenser 4 (i.e. in fluid communication with the outlet of the main condenser 4). The expansion valve 6 is in fluid communication with the subcooler 30 and is located downstream of the subcooler 30 with respect to the refrigerant flow. In examples, the expansion valve 6 may be an electronic expansion valve, an orifice, expander, or the like. In other examples, the chiller system 1 may not include a subcooler 30, such that the expansion valve may be in direct fluid communication with the outlet of the main condenser 4.

The evaporator 8 is downstream of and in fluid communication with the expansion valve 6. The evaporator 8 is configured to provide heat exchange between the refrigerant and a process fluid provided to the chiller system, such as water, to cool the process fluid. The compressor 2 is downstream of and in fluid communication with the evaporator 8.

The outlet of the auxiliary condenser 14 is connected to a cooling line 12, which carries an auxiliary refrigerant flow exiting the auxiliary condenser 14. The cooling line 12 is configured to absorb heat from one or more components 16 of the chiller system 1. In this example, the components 16 include electronic components of the compressor 2. In other examples, the components 16 may include parts of the compressor 2, such as a motor, or any components of the chiller system 1 which require cooling when in operation, such as an inverter, or a pump. A valve 28 is located on the cooling line 12 downstream of the auxiliary condenser 14 with respect to the refrigerant flow. The valve 28 is configured to selectively discharge refrigerant from the auxiliary condenser 14 to the cooling line 12 such that the auxiliary refrigerant flow can be provided to the components 16 for cooling. The valve 28 may be a solenoid valve. In other examples, the system 1 may not comprise a valve 28 located on the cooling line 12. Instead, the chiller system 1 may comprise a calibrated orifice. The calibrated orifice is configured to passively control the refrigerant flow from the auxiliary condenser 14 to the cooling line 12. The geometry of the calibrated orifice can be selected to provide the required refrigerant flow rate.

The cooling line 12 is connected to the compressor 2 to return the auxiliary refrigerant flow to the refrigeration circuit. In other examples, the cooling line 12 may be connected to a point upstream of the compressor 2 in the refrigeration circuit to return the auxiliary refrigerant flow to the refrigerant circuit (for example, between the evaporator and the compressor). The auxiliary cooling branch 10, which includes the auxiliary condenser 14 and the cooling line 12, bypasses the main condenser 4, the expansion valve 6, and the evaporator 8. The auxiliary cooling branch 10 therefore provides a parallel refrigerant flow with respect to the refrigerant flow through a party of the refrigeration circuit extending from the main condenser 4 to at least the evaporator 8 and optionally the compressor 2.

The chiller system comprises a controller 26. The controller 26 is configured to control actuation of the expansion valve 6 to control the flow of refrigerant through the refrigerant circuit. In this example, the controller 26 is configured to control the actuation of the valve 28 to selectively control the flow of refrigerant from the auxiliary condenser 14 to the cooling line 12. In other examples, when calibrated orifice is used instead of a valve 28, the calibrated orifice is not controlled by the controller. Instead, the calibrated orifice permits refrigerant to flow therethrough in a passive manner.

It will be appreciated that the chiller system 1 is an example and can be modified to include additional components. It will also be appreciated that there can be one or more sensors provided at or near the inlet and/or outlets of each of the components in the chiller system. The one or more sensors can be configured to sense or measure one or more properties of the refrigerant, the process fluid, and/or the components. The measured data can be sent to the controller 26, which can use the data to adjust parameters or operating points of the chiller system 1.

In operation, the controller 26 is configured to actuate the expansion valve 6 to control refrigerant flow around the refrigeration circuit to meet a cooling demand of the chiller system (i.e. via heat exchange at the main condenser). The compressor 2 compresses the refrigerant received at the compressor inlet from a relatively lower pressure gas to a relatively higher pressure and temperature at its outlet. The pressure of the refrigerant at the outlet of the compressor 2 is referred to as the discharge pressure.

The refrigerant flows through the discharge line 9 to the main condenser 4. A portion of the refrigerant flow in the discharge line 9 is diverted to the auxiliary condenser 14 via the auxiliary cooling branch 10 to provide an auxiliary refrigerant flow. The refrigerant flow is condensed in the condenser unit 20 by the main condenser 4 and the auxiliary refrigerant flow is condensed in the condenser unit 20 by the auxiliary condenser 14. Heat from the refrigerant flow and the auxiliary refrigerant flow is transferred to the external air, which is blown across both the main condenser 4 and the auxiliary condenser 14 by the one or more fans 24. The refrigerant flow and the auxiliary refrigerant flow are thereby cooled. The refrigerant flow and the auxiliary refrigerant flow may be received at the main condenser and the auxiliary condenser, respectively, at the same condenser inlet temperature.

The controller may define an operating map for the chiller system, where the operating map defines a set of operating conditions for the system. For instance, the operating map may define an envelope of operating parameters in which the chiller system is rated and/or permitted to operate. The envelope of operating parameters may be defined by a temperature range of the external heat exchange medium as monitored by a temperature sensor (e.g. ambient air, in the embodiments described above), and/or by a temperature range of the process fluid provided to the evaporator 8, which may be a range of target temperatures, with the controller being configured to operate the chiller system to maintain the process fluid at a set point within the target range. It may be that such a set point is variable within the target range. The operating map may additionally or alternatively be defined by reference to parameters of the refrigerant, such as a discharge temperature of the refrigerant (i.e. upon discharge from the compressor), a discharge temperature of the refrigerant, a suction pressure of the refrigerant (i.e. upon discharge from the expansion valve), a suction temperature or suction saturation temperature of the refrigerant. The operating map limits the conditions in which the chiller system is configured to operate.

The main condenser 4 and the auxiliary condenser 14 may be configured so that throughout the operating map, a first rate of heat transfer from the refrigerant flow to the air at the main condenser 4 is greater than a second rate of heat transfer from the auxiliary refrigerant flow to the air at the auxiliary condenser 14. The relatively higher rate of heat transfer can be determined by the design of the main condenser 4 and the auxiliary condenser 14. For example, the main condenser 4 may be designed to have a greater heat transfer area than the auxiliary condenser 14, which enables it to transfer heat energy at a greater heat transfer rate across the operating map, or a different construction type which permits a higher heat transfer rate.

The main condenser 4 and the auxiliary condenser 14 are configured such that main condenser 4 causes a first pressure drop in the refrigerant flow, and that the auxiliary condenser 14 causes a second pressure drop in the auxiliary refrigerant flow, relative to the discharge pressure. The main condenser is configured so that the first pressure drop is higher than the second pressure drop caused by the auxiliary condenser 14, at the same operating point of the chiller system 1. The chiller system 1 is configured to operate at a plurality of operating points, which can be selected according to several factors, including the size of the system and the level of cooling required. At a particular example operating point, the first pressure drop is at least 100 kPa and the second pressure drop is no more than 50 kPa, for example no more than 20 kPa or no more than 10 kPa.

The relatively low second pressure drop caused by the auxiliary condenser 14 in relation to the first pressure drop caused by the main condenser 4 is a result of the configuration of the heat exchangers of the respective condensers. It is common for pressure drops to be specified and considered in the design of a flow system, with manufacturers reporting pressure drops for components to permit suitable components to be selected for particular requirements. Accordingly, the present disclosure does not relate to or include a detailed discussion of how to provide a condenser that provides a lower pressure drop than another condenser. Merely as an example, the pressure drop across a heat exchanger can be affected by factors including flow surface area and flow velocity. Whether for a MCHE or an RTPF heat exchanger, by varying the number, length, and diameter of the tubes through which refrigerant flows, the pressure drop can be varied. For instance, the pressure drop can be reduced by reducing the number of tubes, reducing the length of the tubes, and/or increasing the diameter of the tubes. In addition, reducing the flow velocity through the heat exchanger can reduce the pressure drop through the heat exchanger. As such, the design of the auxiliary condenser can be formulated to achieve the desired low pressure drop relative to the pressure drop caused by the main condenser 4.

As the second pressure drop through the auxiliary condenser is relatively low, the pressure of the auxiliary refrigerant flow at the outlet of the auxiliary condenser 14 is relatively closer to the discharge pressure. This means that the pressure of auxiliary refrigerant flow in the cooling line 12 is relatively high compared to the suction pressure at the inlet of the compressor 2. Therefore, there is a large pressure differential between the pressure of the auxiliary refrigerant flow in the cooling line 12 and the suction pressure, such that refrigerant can flow effectively from the cooling line 12 to the compressor 2, without any additional pumping force being required. This ensures that the refrigerant in the cooling line can flow readily to receive heat from the components 16 which require cooling, thereby providing good cooling efficiency.

Condensed refrigerant in the auxiliary refrigerant flow exiting the auxiliary condenser is discharged to the cooling line 12. In examples, the geometry of the controller 26 is configured to control the actuation of the valve 28 to selectively allow the condensed refrigerant to flow along the cooling line 12 and to the components 16 which require cooling. The refrigerant will absorb heat from the components 16, heating the refrigerant and converting it into a gaseous form. The gaseous auxiliary refrigerant flow then returns to the refrigeration circuit at or upstream of the inlet of the compressor 2.

The condensed refrigerant exiting the main condenser 4 flows through the subcooler 30 to reduce its temperature. The subcooled refrigerant is then received by the expansion valve 6 which reduces its pressure. As a result, a portion of the refrigerant is converted into a gaseous form. The refrigerant flow, which is now in a mixed two-phase form of liquid and gas, flows to the evaporator 8. The refrigerant flows through the evaporator 8 and absorbs heat from the process fluid i.e. an internal heat transfer medium of a chiller circuit (e.g. water, air, etc.), thereby heating the refrigerant and converting it into a gaseous form. The gaseous refrigerant then returns to the inlet of the compressor 2. The above process continues while the chiller system 1 is operating.

By providing the auxiliary cooling branch 10 (having the auxiliary condenser 14 and auxiliary refrigerant flow for cooling), a cooling loop which is in parallel to parts of the main refrigeration circuit is established (e.g. parallel to at least the expansion valve and evaporator). Therefore, cooling can be provided to the one or more components 16 which require it, without interfering with or disrupting control of the main cooling loop as controlled by actuation of the expansion valve 6.

This can also provide advantageous effects at start up of the chiller system 1. In conventional chiller systems (i.e. those without an auxiliary cooling branch 10), at start up the discharge pressure increases rapidly. It may be necessary to open the expansion valve to mitigate this rapid increase in discharge pressure. However, if components of the chiller system require cooling, there can be a competing requirement to close the expansion valve to ensure that sufficient subcooling is provided to the refrigerant leaving the main condenser so that it can be used for such cooling. These two actions are antagonistic and therefore lead to compromises in system performance or risk damage or low performance issues. The chiller system 1 of the present disclosure avoids such issues by providing the auxiliary cooling branch 10 which is in parallel to the main refrigeration circuit and bypasses the main condenser 4, expansion valve 6 and evaporator 8. This means that the cooling of one or more components 16 of the chiller system 1 is not affected by the need to open the expansion valve 6 to a large extent during start up.

The auxiliary cooling branch 10 also serves as a liquid receiver volume which can be advantageous for providing liquid cooling. For example, upon system start up, components of the chiller system 1 may have a cooling demand to prevent rapid temperatures rise. The chiller system 1 of the present disclosure enables this rapid cooling to be provided at start up by maintaining a buffer or reserve supply of cooled liquid refrigerant downstream of the auxiliary condenser 14. This supply can be provided by the internal volume of the auxiliary cooling branch, for example comprising the associated pipework downstream of the auxiliary condenser 14, which enables a portion of cooled refrigerant to be stored. The auxiliary cooling branch 10 may further comprise a tank to store a portion of cooled refrigerant exiting the auxiliary condenser 14. The stored refrigerant in the buffer can be used to provide rapid cooling to components of the chiller system 1 upon start up.

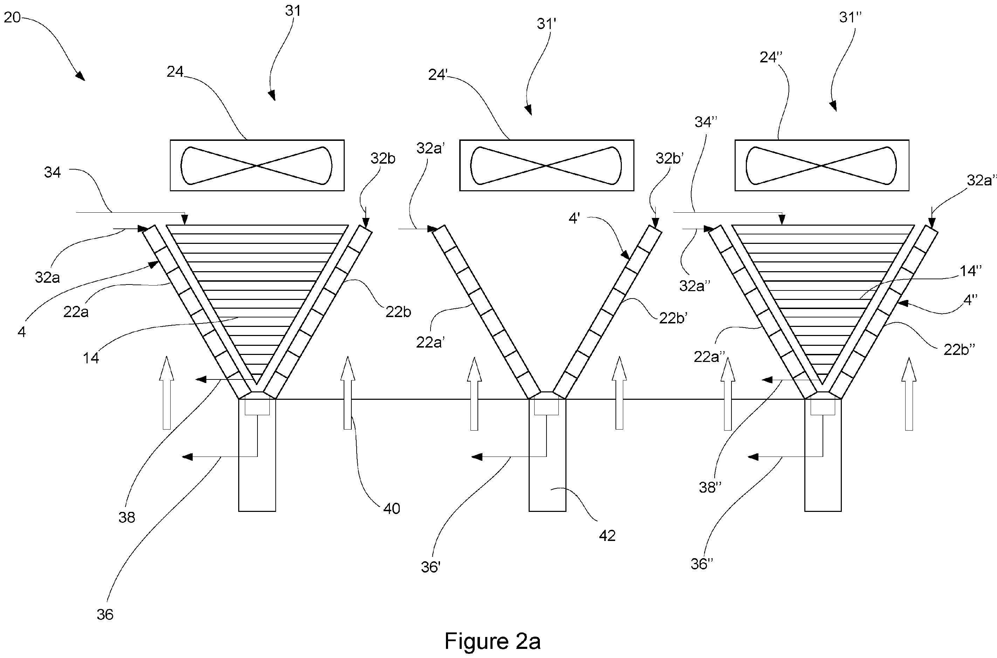

Figure 2a schematically shows an example condenser unit 20. The condenser unit 20 comprises three condenser modules 31, 31', 31". In other examples, the condenser unit 20 may include any number of condenser modules. The condenser modules 31, 31', 31" are supported by a frame 42. It will be appreciated that similar reference numerals for each of the condenser modules 31, 31', 31" indicates that similar features are present.

Each condenser module 31, 31', 31" comprises a main condenser 4, 4', 4". The main condenser 4, 4', 4" comprises two main heat exchangers 22a, 22b; 22a', 22b'; 22a", 22b". The main heat exchangers 22a, 22b; 22a', 22b'; 22a", 22b" are arranged to be spaced apart from one another. The main heat exchangers 22a, 22b; 22a', 22b'; 22a", 22b" are substantially planar. The main heat exchangers 22a, 22b; 22a', 22b'; 22a", 22b" may be microchannel heat exchangers (MCHEs), or round-tube plate-fin (RTPF) heat exchangers, as described previously. Each main heat exchanger 22a, 22b; 22a', 22b'; 22a", 22b" has a respective inlet 32a, 32b; 32a', 32b', 32a", 32b", through which refrigerant from the discharge line enters the heat exchanger. Each of the main heat exchangers 22a, 22b; 22a', 22b'; 22a", 22b" of each condenser module 31, 31', 32" has respective outlets, which are manifolded to a common outlet 36, 36', 36". The common outlet 36, 36', 36" is configured to discharge condensed refrigerant downstream towards the expansion valve 6. The outlets 36, 36', 36" for the main condenser 4, 4', 4" for each of the plurality of condenser modules 31, 31', 32" may be manifolded to a common outlet manifold.

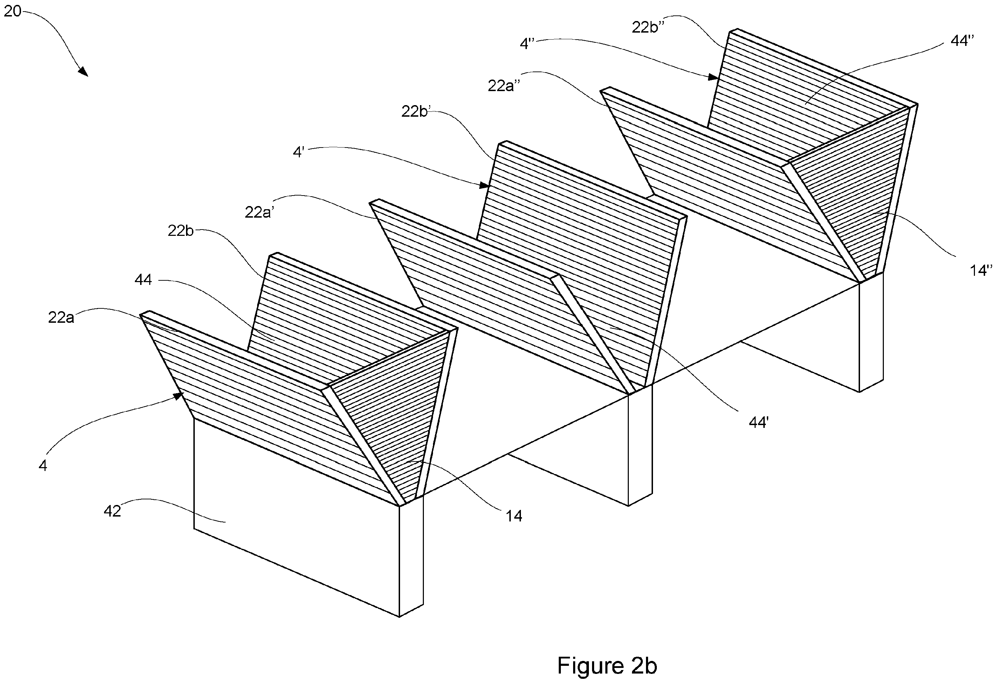

At least one of the condenser modules 31, 31', 32" comprises an auxiliary condenser 14, 14". As In this example, the first and third condenser modules 31, 31" (seen from left to right in Figure 2) comprise a respective auxiliary condenser 14, 14". In other examples, all of the condenser modules in the condenser unit may have an auxiliary condenser. As described previously, the auxiliary condenser 14, 14" may be a microchannel heat exchanger (MCHE), or a round-tube plate-fin (RTPF) heat exchanger. The auxiliary condenser 14, 14" has an inlet 34, 34", through which refrigerant from the discharge line enters. The auxiliary condenser 14, 14" has an outlet 38, 38" through which condensed refrigerant exits to the cooling line 12. The outlets 38, 38" for the respective auxiliary condensers of the plurality of condenser modules may be manifolded to a common outlet manifold.

Each condenser module 31, 31', 32" comprises at least one fan 24, 24', 24". The fan 24, 24', 24" is configured to force airflow 40 through and across the main condensers 4, 4', 4" and the auxiliary condensers 14, 14" such that refrigerant flowing through the condensers can transfer heat to the airflow 40.

Figure 2b shows an isometric view of the condenser unit 20 of Figure 2a, with the fans not shown for ease of understanding. The auxiliary condenser 14, 14" of each condenser module 31, 31', 32" is located within an installation volume 44, 44', 44" circumscribed by the respective main condenser 4, 4', 4". The installation volume 44, 44', 44" relates to the three-dimensional space present in the gap between the main heat exchangers of a condenser module. As shown in both Figures 2a and 2b, the auxiliary condenser 14, 14" is located within the installation volume 44, 44', 44" defined by the space between the main heat exchangers 22a, 22b; 22a', 22b'; 22a", 22b". In this example, each of the main heat exchangers 22a, 22b; 22a', 22b'; 22a", 22b" is formed in a substantially planar shape. As a result, each main heat exchanger 22a, 22b; 22a', 22b'; 22a", 22b" defines a respective plane. In this example, the two main heat exchangers 22a, 22b; 22a', 22b'; 22a", 22b" of each condenser module 31, 31', 32" are arranged such that their respective planes are angled with respect to each other. In this example, the respective planes are arranged to define an acute angle with respect to each other. The main heat exchangers 22a, 22b; 22a', 22b'; 22a", 22b" are therefore arranged in a "V"-shape. In other examples, the main heat exchangers 22a, 22b; 22a', 22b'; 22a", 22b" may be arranged in any suitable configuration, such as to form an "A"-shape. In further examples, the main condenser 4, 4', 4" may comprise four such main heat exchangers that are arranged in a "W"-shape.

As a result of being angled with respect to one another, the installation volume 44, 44', 44" circumscribed by the main heat exchangers 22a, 22b; 22a', 22b'; 22a", 22b" has a triangular cross section in the particular example shown. The installation volume 44, 44', 44" extends along a longitudinal axis of the main heat exchangers 22a, 22b; 22a', 22b'; 22a", 22b". As shown in Figure 2b, the installation volume has a shape resembling a triangular prism. The main heat exchangers 22a, 22b; 22a', 22b'; 22a", 22b" are arranged such that the installation volume 44, 44', 44" has at least one open axial end. The auxiliary condenser has a peripheral profile which corresponds to the cross-section of a void of the installation volume 44, 44', 44" or which corresponds to a shape of an end of the installation volume 44, 44', 44". In this example, the auxiliary condenser 14, 14" has a triangular peripheral profile, which corresponds to both the triangular cross-section of the void of the installation volume 44, 44', 44" and the triangular shape formed at the end of the installation volume 44, 44', 44". The auxiliary condenser 14, 14" is disposed at an axial end of the installation volume 44, 44', 44", so as to at least partially close the open axial end. In other examples, the auxiliary condenser 14, 14" may be disposed at any axial position along the axial length of the installation volume 44, 44', 44". In further examples, there may be a plurality of auxiliary condensers 14, 14" disposed at respective axial positions along the axial length of the installation volume 44, 44', 44". The auxiliary condenser 14, 14" may be secured in position to the frame 42 and/or to the main heat exchangers 22a, 22b; 22a', 22b'; 22a", 22b" with the use of any suitable fixing means, for example using fasteners. By disposing the auxiliary condenser 14, 14" with an installation volume 44, 44', 44" formed by the space between main heat exchangers 22a, 22b; 22a', 22b'; 22a", 22b", the present arrangement utilises space with is otherwise left unused in a conventional condenser unit. Therefore, space is used in an efficient manner, such that the condenser unit 20 has a compact construction. In addition, this removes the need for the auxiliary condenser 14, 14" to be housed in a separate unit to the main condenser 4, 4', 4". This enables the main condenser 4, 4', 4" and the auxiliary condenser 14, 14" to share the airflow generated by the fan 24, 24', 24" for external heat exchange.

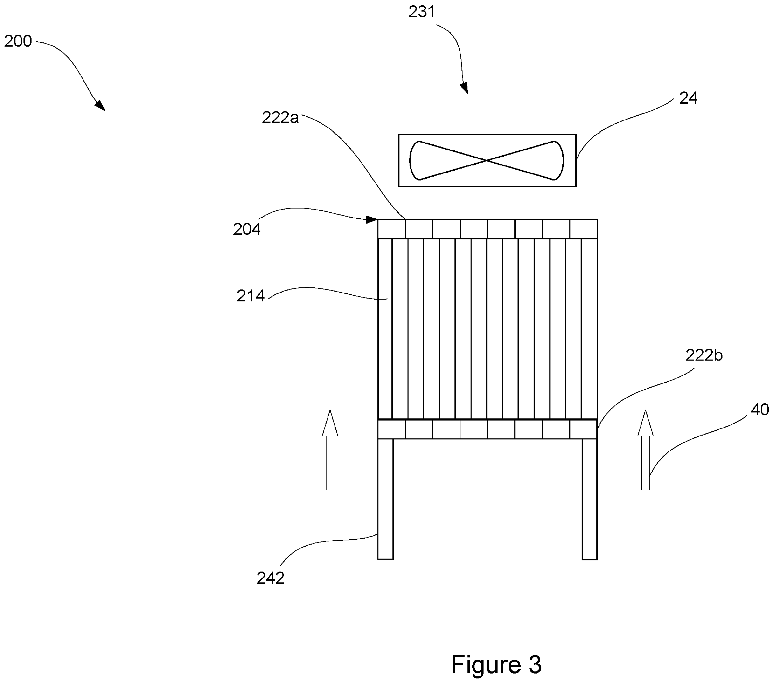

Figure 3 schematically shows a view of a second example condenser unit 200. The second example condenser unit 200 comprises similar features to that of the first example condenser unit 20, with like reference numerals indicating like features. The second example condenser unit 200 differs from the first example condenser unit 20 in the arrangement of the main heat exchangers and the peripheral profile of the auxiliary condenser.

The condenser unit 200 comprises a condenser module 231. In this example, only a single condenser module 231 is shown, however, in other examples a plurality of condenser modules 231 may be present in the condenser unit 200. The condenser module comprises a main condenser 204. The main condenser 204 comprises two main heat exchangers 222a, 222b. The main heat exchangers 222a, 222b are arranged to be spaced apart from one another. In this example, the main heat exchangers 222a, 222b are spaced apart vertically from one another. The main heat exchangers 222a, 222b are supported by the frame 242.

The condenser module 231 also includes an auxiliary condenser 214. The auxiliary condenser 214 is disposed between the main heat exchangers 222a, 222b. Both the main heat exchangers 222a, 222b and the auxiliary condenser 214 have refrigerant inlet and outlet arrangements similar to those described with reference to the first example condenser unit 20. The condenser module 231 also comprises at least one fan 24. The fan 24 is configured to force airflow 40 upwards through and across the main condenser 204 and the auxiliary condenser 214 such that refrigerant flowing through the condensers can transfer heat to the airflow 40. As with the first example condenser unit, the main heat exchangers 222a, 222b and the auxiliary condenser 214 may be microchannel heat exchangers (MCHE), or a round-tube plate-fin (RTPF) heat exchangers.

The main heat exchangers 222a, 222b are each formed in a substantially planar shape. As a result, each main heat exchanger 222a, 222b defines a respective plane. In this example, the main heat exchangers 222a, 222b are arranged such that their respective planes are parallel with respect to each other. As such, the installation volume circumscribed by the space between the main heat exchangers has a rectangular cross-section. The installation volume extends along the axial length of the main heat exchangers 222a, 222b. The installation volume therefore resembles a cuboid extending along the length of the main heat exchangers 222a, 222b.

The main heat exchangers 222a, 222b are arranged such that the installation volume has at least one open axial end. The auxiliary condenser 214 has a peripheral profile which corresponds to the cross-section of a void of the installation volume or which corresponds to a shape of an end of the installation volume. In this example, the auxiliary condenser 214 has a rectangular peripheral profile, which corresponds to both the rectangular cross-section of the void of the installation volume and the rectangular shape at the end of the installation volume. The auxiliary condenser 214 is disposed at one axial end of the installation volume, so as to at least partially close the open axial end. In other examples, the auxiliary condenser 214 may be disposed at any axial position along the longitudinal axis of the installation volume. In further examples, there may be a plurality of auxiliary condensers 214 disposed at respective axial positions along the axial length of the installation volume. The auxiliary condenser 214 may be secured in position to the frame 42 and/or to the main heat exchangers 222a, 222b with the use of any suitable fixing means, for example using fasteners.

## Claims

1. A chiller system (1) comprising:
a refrigeration circuit comprising, in flow order, a compressor (2), a main condenser (4, 4', 4", 204), an expansion valve (6) and an evaporator (8);
an auxiliary cooling branch (10) configured to receive an auxiliary refrigerant flow from the refrigerant circuit downstream of the compressor (2), the auxiliary cooling branch (10) bypassing the main condenser (4, 4', 4", 204), expansion valve (6) and evaporator (8), the auxiliary branch comprising an auxiliary condenser (14, 14", 214) configured to discharge refrigerant to a cooling line (12) for cooling one or more components (16) of the chiller system (1);
wherein the cooling line (12) is configured to return the portion of refrigerant flow to the refrigeration circuit at or upstream of the compressor (2);
wherein the main condenser (4, 4', 4", 204) and auxiliary condenser (14, 14", 214) are co-located for heat exchange with a common flow of an external heat exchange medium;
**characterised in that** the main condenser (4, 4', 4", 204) comprises a plurality of main heat exchangers (22a, 22b, 222a, 222b) spaced apart from one another;
wherein the auxiliary condenser (14, 14", 214) is located within an installation volume (44, 44', 44") circumscribed by the main condenser (4, 4', 4", 204) and defined between the main heat exchangers (22a, 22b, 222a, 222b); and
wherein the main heat exchangers (22a, 22b, 222a, 222b) are arranged so that the installation volume (44, 44', 44") extends along a longitudinal axis of the main heat exchangers (22a, 22b, 222a, 222b) and has an open axial end which is at least partly closed by the auxiliary condenser (14, 14", 214).

2. A chiller system (1) according to claim 1, wherein each of two adjacent main heat exchangers (22a, 22b, 222a, 222b) of the main condenser (4, 4', 4", 204) is substantially planar and defines a respective plane, wherein the respective planes are angled relative to each other so that the installation volume (44, 44', 44") has a triangular cross-section.

3. A chiller system (1) according to any of claims 1-2, wherein the auxiliary condenser (14, 14", 214) has a peripheral profile corresponding to a cross-section of a void of the installation volume (44, 44', 44") defined by the main condenser (4, 4', 4", 204) or corresponding to a shape of an end of the installation volume (44, 44', 44").

4. A chiller system (1) according to claims 2 and 3, wherein the auxiliary condenser (14, 14", 214) has a triangular peripheral profile corresponding to the triangular cross-section of the installation volume (44, 44', 44").

5. A chiller system (1) according to any preceding claim, wherein the auxiliary condenser (14, 14", 214) comprises one of a microchannel heat exchanger (MCHE) and a round-tube plate-fin (RTPF) heat exchanger.

6. A chiller system (1) according to any preceding claim, wherein the main condenser (4, 4', 4", 204) is an air-cooled condenser, the chiller system (1) comprising a main condenser fan (24, 24', 24") configured to provide an airflow as the common flow through both the main condenser (4, 4', 4", 204) and the auxiliary condenser (14, 14", 214).

7. A chiller system (1) according to any preceding claim, wherein the cooling line (12) is configured to cool at least one of: a motor of the compressor, electronic componentry of the compressor, and a pump.

8. A chiller system (1) according to any preceding claim, further comprising a controller (26) configured to control refrigerant flow around the refrigerant circuit by actuation of a control device such as the expansion valve (6), wherein the cooling line (12) bypasses the portion of the refrigerant circuit comprising the control device.

9. A chiller system (1) according to claim 8, wherein the chiller system (1) is configured so that the refrigerant flow and the auxiliary refrigerant flow are received at the main condenser (4, 4', 4", 204) and the auxiliary condenser (14, 14", 214), respectively, at the same condenser inlet temperature, and wherein the controller (26) defines an operating map of operating conditions for operation of the chiller system (1);
wherein the main condenser (4, 4', 4", 204) and the auxiliary condenser (14, 14", 214) are configured so that throughout the operating map, a first rate of heat transfer from the refrigerant flow at the main condenser (4, 4', 4", 204) is greater than a second rate of heat transfer from the auxiliary refrigerant flow at the auxiliary condenser (14, 14", 214).

10. A chiller system (1) according to any of claims 8-9, further comprising a solenoid valve (28) located on the cooling line (12) downstream of the auxiliary condenser (14, 14", 214); wherein the controller (26) is configured to control the discharge of refrigerant to the cooling line (12) by actuation of the solenoid valve (28).

## Patentansprüche

1. Kühlsystem (1), das Folgendes umfasst:
einen Kältemittelkreislauf, der in Strömungsreihenfolge einen Kompressor (2), einen Hauptkondensator (4, 4', 4", 204), ein Expansionsventil (6) und einen Verdampfer (8) umfasst;
einen Hilfskühlungsabzweig (10), der dafür gestaltet ist, prozessabwärts des Kompressors (2) einen Hilfskältemittelstrom von dem Kältemittelkreislauf aufzunehmen, wobei der Hilfskühlungsabzweig (10) den Hauptkondensator (4, 4', 4", 204), das Expansionsventil (6) und den Verdampfer (8) umgeht, wobei der Hilfsabzweig einen Hilfskondensator (14, 14", 214) umfasst, der dafür gestaltet ist, Kältemittel in eine Kühlleitung (12) zum Kühlen einer oder mehrerer Komponenten (16) des Kühlsystems (1) abzulassen;
wobei die Kühlleitung (12) dafür gestaltet ist, den Teil des Kältemittelstromes an dem oder prozessaufwärts des Kompressors (2) zu dem Kältemittelkreislauf zurückzuführen;
wobei der Hauptkondensator (4, 4', 4", 204) und der Hilfskondensator (14, 14", 214) zwecks Wärmetauschs mit einem gemeinsamen Strom eines externen Wärmetauschmediums beieinander angeordnet sind;
**dadurch gekennzeichnet, dass**
der Hauptkondensator (4, 4', 4", 204) mehrere Hauptwärmetauscher (22a, 22b, 222a, 222b) umfasst, die voneinander beabstandet sind;
wobei sich der Hilfskondensator (14, 14", 214) in einem Installationsvolumen (44, 44', 44'') befindet, das von dem Hauptkondensator (4, 4', 4"), 204) umgeben und zwischen den Hauptwärmetauschern (22a, 22b, 222a, 222b) definiert ist; und
wobei die Hauptwärmetauscher (22a, 22b, 222a, 222b) derart angeordnet sind, dass sich das Installationsvolumen (44, 44', 44") entlang einer Längsachse der Hauptwärmetauscher (22a, 22b, 222a, 222b) erstreckt und ein offenes axiales Ende aufweist, das zumindest teilweise durch den Hilfskondensator (14, 14", 214) verschlossen ist.

2. Kühlsystem (1) nach Anspruch 1, wobei jeder von zwei benachbarten Hauptwärmetauschern (22a, 22b, 222a, 222b) des Hauptkondensators (4, 4', 4", 204) im Wesentlichen eben ist und eine entsprechende Ebene definiert, wobei die entsprechenden Ebenen zueinander winklig sind, so dass das Installationsvolumen (44, 44', 44") einen dreieckigen Querschnitt aufweist.

3. Kühlsystem (1) nach einem der Ansprüche 1 bis 2, wobei der Hilfskondensator (14, 14", 214) ein Umfangsprofil aufweist, das einem Querschnitt eines Hohlraums des Installationsvolumens (44, 44', 44") entspricht, der von dem Hauptkondensator (4, 4', 4", 204) definiert ist, oder einer Form eines Endes des Installationsvolumens (44, 44', 44'') entspricht.

4. Kühlsystem (1) nach den Ansprüchen 2 und 3, wobei der Hilfskondensator (14, 14", 214) ein dreieckiges Umfangsprofil aufweist, das dem dreieckigen Querschnitt des Installationsvolumens (44, 44', 44") entspricht.

5. Kühlsystem (1) nach einem vorhergehenden Anspruch, wobei der Hilfskondensator (14, 14", 214) mindestens einen Mikrokanal-Wärmetauscher (MCHE) oder einen Lamellenpaket-(RTPF-)Wärmetauscher umfasst.

6. Kühlsystem (1) nach einem vorhergehenden Anspruch, wobei der Hauptkondensator (4, 4', 4", 204) ein luftgekühlter Kondensator ist, wobei das Kühlsystem (1) ein Hauptkondensatorgebläse (24, 24', 24") umfasst, das dafür gestaltet ist, einen Luftstrom als den gemeinsamen Strom durch sowohl den Hauptkondensator (4, 4', 4", 204) als auch den Hilfskondensator (14, 14", 214) bereitzustellen.

7. Kühlsystem (1) nach einem vorhergehenden Anspruch, wobei die Kühlleitung (12) dafür gestaltet ist, mindestens eines des Folgenden zu kühlen: einen Motor des Kompressors, elektronische Komponenten des Kompressors und eine Pumpe.

8. Kühlsystem (1) nach einem vorhergehenden Anspruch, ferner eine Steuerung (26) umfassend, die dafür gestaltet ist, den Kältemittelstrom im Kältemittelkreis durch Betätigen einer Steuervorrichtung, wie beispielsweise des Expansionsventils (6), zu steuern, wobei die Kühlleitung (12) den Abschnitt des Kältemittelkreislaufs umgeht, der die Steuerungsvorrichtung umfasst.

9. Kühlsystem (1) nach Anspruch 8, wobei das Kühlsystem (1) derart gestaltet ist, dass der Kältemittelstrom und der Hilfskältemittelstrom an dem Hauptkondensator (4, 4', 4", 204) beziehungsweise dem Hilfskondensator (14, 14", 214) mit der gleichen Kondensatoreinlasstemperatur empfangen werden, und wobei die Steuerung (26) ein Betriebskennfeld von Betriebsbedingungen für den Betrieb des Kühlsystems (1) definiert;
wobei der Hauptkondensator (4, 4', 4", 204) und der Hilfskondensator (14, 14", 214) derart gestaltet sind, dass im gesamten Betriebskennfeld eine erste Rate der Wärmeübertragung von dem Kältemittelstrom an dem Hauptkondensator (4, 4', 4", 204) größer ist als eine zweite Rate der Wärmeübertragung von dem Hilfskältemittelstrom an dem Hilfskondensator (14, 14", 214).

10. Kühlsystem (1) nach einem der Ansprüche 8 bis 9, ferner ein Magnetventil (28) umfassend, das sich an der Kühlleitung (12) prozessabwärts des Hilfskondensators (14, 14", 214) befindet, wobei die Steuerung (26) dafür gestaltet ist, das Ablassen von Kältemittel in die Kühlleitung (12) durch Betätigen des Magnetventils (28) zu steuern.

## Revendications

1. Système de refroidisseur (1), comprenant :
un circuit de réfrigération comprenant, dans l'ordre de l'écoulement, un compresseur (2), un condenseur principal (4, 4', 4", 204), un détendeur (6) et un évaporateur (8) ;
une branche de refroidissement auxiliaire (10) conçue pour recevoir un flux de réfrigérant auxiliaire depuis le circuit de réfrigération en aval du compresseur (2), la branche de refroidissement auxiliaire (10) contournant le condenseur principal (4, 4', 4", 204), le détendeur (6) et l'évaporateur (8), la branche auxiliaire comprenant un condenseur auxiliaire (14, 14", 214) conçu pour évacuer le réfrigérant vers une conduite de refroidissement (12) pour refroidir un ou plusieurs composants (16) du système de refroidisseur (1) ;
dans lequel la conduite de refroidissement (12) est conçue pour retourner la partie du flux de réfrigérant vers le circuit de réfrigération au niveau ou en amont du compresseur (2) ;
dans lequel le condenseur principal (4, 4', 4", 204) et le condenseur auxiliaire (14, 14", 214) sont co-localisés pour l'échange de chaleur avec un flux commun d'un milieu externe d'échange de chaleur ;
**caractérisé en ce que**
le condenseur principal (4, 4', 4", 204) comprend une pluralité d'échangeurs thermiques principaux (22a, 22b, 222a, 222b) espacés les uns des autres ;
dans lequel le condenseur auxiliaire (14, 14", 214) est situé à l'intérieur d'un volume d'installation (44, 44', 44") circonscrit par le condenseur principal (4, 4', 4", 204) et défini entre les échangeurs thermiques principaux (22a, 22b, 222a, 222b) ;
dans lequel les échangeurs thermiques principaux (22a, 22b, 222a, 222b) sont disposés de telle sorte que le volume d'installation (44, 44', 44") s'étend le long d'un axe longitudinal des échangeurs thermiques principaux (22a, 22b, 222a, 222b) et a une extrémité axiale ouverte qui est au moins en partie fermée par le condenseur auxiliaire (14, 14", 214).

2. Système de refroidisseur (1) selon la revendication 1, dans lequel chacun de deux échangeurs thermiques principaux (22a, 22b, 222a, 222b) adjacents du condenseur principal (4, 4', 4", 204) est sensiblement planaire et incliné par rapport à l'autre de telle sorte que le volume d'installation (44, 44', 44") présente une section transversale triangulaire.

3. Système de refroidisseur (1) selon l'une quelconque des revendications 1 et 2, dans lequel le condenseur auxiliaire (14, 14", 214) présente un profil périphérique correspondant à une section transversale d'un vide du volume d'installation (44, 44', 44") défini par le condenseur principal (4, 4', 4", 204) ou correspondant à une forme d'une extrémité du volume d'installation (44, 44', 44").

4. Système de refroidisseur (1) selon les revendication 2 et 3, dans lequel le condenseur auxiliaire (14, 14", 214) présente un profil périphérique triangulaire correspondant à la section transversale triangulaire du volume d'installation (44, 44', 44").

5. Système de refroidisseur (1) selon l'une quelconque des revendications précédentes, dans lequel le condenseur auxiliaire (14, 14", 214) comprend l'un d'un échangeur thermique à microcanal (MCHE) et d'un échangeur thermique à ailettes plaques et tube rond (RTPF).

6. Système de refroidisseur (1) selon l'une quelconque des revendications précédentes, dans lequel le condenseur principal (4, 4', 4", 204) est un condenseur refroidi à l'air, le système de refroidisseur (1) comprenant un ventilateur de condenseur principal (24, 24', 24") conçu pour produire un flux d'air en tant que flux commun à travers le condenseur principal (4, 4', 4", 204) et le condenseur auxiliaire (14, 14", 214).

7. Système de refroidisseur (1) selon l'une quelconque des revendications précédentes, dans lequel la conduite de refroidissement (12) est conçue pour refroidir au moins l'un d'un moteur du compresseur, de composants électroniques du compresseur et d'une pompe.

8. Système de refroidisseur (1) selon l'une quelconque des revendications précédentes, comprenant en outre un dispositif de commande (26) configuré pour commander un flux de réfrigérant autour du circuit de réfrigérant par l'actionnement d'un dispositif de commande tel que le détendeur (6), dans lequel la conduite de refroidissement (12) contourne la partie du circuit de réfrigérant comprenant le dispositif de commande.

9. Système de refroidisseur (1) selon la revendication 8, dans lequel le système de refroidisseur (1) est conçu de telle sorte que le flux de réfrigérant et le flux de réfrigérant auxiliaire sont reçus dans le condenseur principal (4, 4', 4", 204) et le condenseur auxiliaire (14, 14", 214), respectivement, à la même température d'entrée de condenseur, et dans lequel le dispositif de commande (26) définit une carte de fonctionnement de conditions de fonctionnement pour le fonctionnement du système de refroidisseur (1) ;
dans lequel le condenseur principal (4, 4', 4", 204) et le condenseur auxiliaire (14, 14", 214) sont conçus de telle sorte que dans la carte de fonctionnement complète, un premier taux de transfert thermique depuis le flux de réfrigérant dans le condenseur principal (4, 4', 4", 204) est supérieur à un second taux de transfert thermique depuis le flux de réfrigérant auxiliaire dans le condenseur auxiliaire (14, 14", 214).

10. Système de refroidisseur (1) selon l'une quelconque des revendications 8 et 9, comprenant en outre une électrovanne (28) située sur la conduite de refroidissement (12) en aval du condenseur auxiliaire (14, 14", 214) ; dans lequel le dispositif de commande (26) est configuré pour commander l'évacuation du réfrigérant vers la conduite de refroidissement (12) par l'actionnement de l'électrovanne (28).
